# DEMANDE DE BREVET EUROPEEN

(11) **EP 4 570 647 A1**
(43) Date de publication de la demande: **18.06.2025**
(21) Numéro de dépôt: 24218928.0
(22) Date de dépôt: 11.12.2024
(51) Int. Cl.: B64C 1/06, B62D 21/15, F16F 7/00, F16F 7/12, B64C 27/00

(54) **DISPOSITIF D'ABSORPTION D'ÉNERGIE PAR COMPRESSION, AÉRONEF COMPRENANT AU MOINS UN TEL DISPOSITIF**

(30) Priorité: 14.12.2023 FR 2314131
(71) Demandeur: AIRBUS OPERATIONS (S.A.S.), 31060 Toulouse (FR)
(72) Inventeur: DURAND, Jérôme, 31060 TOULOUSE (FR); VANDERSTEEN, Marc, 31060 TOULOUSE (FR)
(74) Mandataire: Airbus-OPS SAS

(57) **Abrégé**

L'invention a pour objet un dispositif d'absorption d'énergie par compression comportant plusieurs premiers conduits (36) espacés entre eux et orientés selon une direction de compression (DC) ainsi que des parois de jonction (38) parallèles à la direction de compression (DC) et reliant les premiers conduits (36) de manière à délimiter, avec ces derniers, au moins un deuxième conduit (40). Cette solution permet d'absorber une plus grande quantité d'énergie.

L'invention a également pour objet un aéronef comportant au moins un tel dispositif d'absorption d'énergie.

## Description

La présente demande se rapporte à un dispositif d'absorption d'énergie par compression ainsi qu'à un aéronef comprenant au moins un tel dispositif.

Selon un mode de réalisation, un panneau comprend des première et deuxième peaux ainsi qu'une structure alvéolaire, intercalée entre les première et deuxième peaux, qui comprend une pluralité de conduits orientés perpendiculairement aux première et deuxième peaux. Cette structure alvéolaire présente une géométrie en nid d'abeilles et comprend une pluralité de conduits identiques, juxtaposés et de sections hexagonales. Généralement, les conduits ont une section réduite, ce qui confère au panneau une grande résistance à la compression (efforts perpendiculaires aux peaux). De tels panneaux ne sont pas utilisés en tant que module d'absorption d'énergie par compression.

Selon un mode de réalisation décrit dans le document US9.637.212, un aéronef comprend un module d'absorption d'énergie par compression positionné entre la peau du fuselage et un carénage. Ce module comprend une structure alvéolaire comprenant une pluralité de conduits orientés parallèlement à la peau du fuselage et au carénage. Cette structure alvéolaire présente une géométrie en nid d'abeilles et comprend une pluralité de conduits identiques, juxtaposés, de sections hexagonales et orientés selon une direction perpendiculaire à une direction de déformation. Ce mode de réalisation ne permet pas d'absorber une grande quantité d'énergie. Le brevet GB 2555862 divulgue un composant de protection d'aéronef comprenant des conduits dont la direction des axes de ces conduits est orthogonale au sens de compression. Le brevet EP 2505490 divulgue un type d'absorbeur de chocs comprenant une multitude de conduits contiguës entre eux. De plus, ledit absorbeur ne comprend pas de parois d'extrémités obturant la première et seconde extrémité d'un conduit. Le brevet EP 1426289 concerne une structure de fuselage incluant un absorbeur d'énergie ayant une capacité d'absorption d'énergie par compression, ledit absorbeur ne pouvant pas être dissocié du fuselage, et ne comprenant pas de parois d'extrémités obturant la première et seconde extrémité d'un conduit. Le brevet EP 1930237 divulgue une structure primaire d'hélicoptère adapté pour subir des déformations, et ne comprend donc pas de dispositif d'absorption d'énergie par compression au sens de l'invention.

La présente invention vise à remédier à tout ou partie des inconvénients de l'art antérieur.

A cet effet, l'invention a pour objet un dispositif d'absorption d'énergie par compression configuré pour être positionné entre des premier et deuxième éléments et être soumis à des efforts de compression orientés selon une direction de compression, ledit dispositif comportant au moins un module d'absorption d'énergie par compression qui comprend plusieurs premiers conduits orientés selon la direction de compression et présentant chacun une section transversale ainsi que des première et deuxième extrémités.

Selon l'invention, des premiers conduits sont espacés entre eux. En complément, le module d'absorption d'énergie par compression comprend des parois de jonction, parallèles à la direction de compression, reliant ces premiers conduits de manière à délimiter avec ces derniers au moins un deuxième conduit. De plus, chaque module d'absorption d'énergie par compression comprend au moins une première paroi d'extrémité configurée pour obturer la première extrémité d'au moins un premier conduit ainsi qu'au moins une deuxième paroi d'extrémité configurée pour obturer la deuxième extrémité d'au moins un premier conduit.

Un tel module d'absorption d'énergie par compression permet d'absorber une grande quantité d'énergie.

Selon une autre caractéristique, la première paroi d'extrémité est configurée de sorte à dégager au moins partiellement le deuxième conduit. Selon une autre caractéristique, la deuxième paroi d'extrémité est configurée de sorte à dégager au moins partiellement le deuxième conduit. Selon une autre caractéristique, la première paroi d'extrémité et la deuxième paroi d'extrémité sont chacune configurées de sorte à dégager au moins partiellement le deuxième conduit.

Selon une autre caractéristique, chacun des premiers conduits délimitant le second conduit est espacé de tous les autres premiers conduits délimitant ce même second conduit, pour optimiser la capacité d'écrasement du module.

Selon une autre caractéristique, chaque deuxième conduit présente une section transversale supérieure à la section transversale de chaque premier conduit bordant le deuxième conduit.

Selon une autre caractéristique, les parois de jonction sont orientées selon deux ou trois directions de manière à obtenir un réseau de type orthogrid ou isogrid.

Selon une autre caractéristique, le module d'absorption d'énergie par compression comprend au moins un deuxième conduit de section transversale carrée ou rectangulaire, les premiers conduits étant positionnés au niveau des côtés de la section transversale du deuxième conduit sensiblement carrée ou rectangulaire et écartés des sommets de la section transversale de chaque deuxième conduit.

Selon une autre caractéristique, le module d'absorption d'énergie par compression comprend, au niveau d'au moins un côté du deuxième conduit, deux ou trois premiers conduits cylindriques et/ou demi-cylindriques.

Selon une autre caractéristique, le module d'absorption d'énergie par compression comprend, au niveau des côtés du deuxième conduit, deux ou trois premiers conduits cylindriques et/ou demi-cylindriques.

Selon une autre caractéristique, le module d'absorption d'énergie par compression comprend au moins un côté du deuxième conduit exempt de premier conduits.

Selon une autre caractéristique, le module d'absorption d'énergie par compression comprend une ou plusieurs première(s) paroi(s) d'extrémité obturant la première extrémité de tous les premiers conduits et dégageant au moins partiellement le deuxième conduit ainsi qu'une ou plusieurs deuxième(s) paroi(s) d'extrémité obturant la deuxième extrémité de tous les premiers conduits et dégageant au moins partiellement le deuxième conduit.

Selon une autre caractéristique, chacune des première et deuxième parois d'extrémité forme un cadre délimité par un bord intérieur ainsi que par un bord extérieur espacé du bord intérieur d'une distance suffisante pour obturer tous les premiers conduits du module d'absorption d'énergie par compression.

Selon une autre caractéristique, chaque module d'absorption d'énergie par compression comprend au moins un système d'attache pour le relier à au moins un élément parmi les premier et deuxième éléments entre lesquels ledit module d'absorption d'énergie par compression est positionné.

Selon une autre caractéristique de l'invention, le dispositif d'absorption d'énergie par compression comprend au moins deux modules d'absorption d'énergie par compression dont au moins un module d'absorption d'énergie par compression qui comprend au moins une paroi de jonction commune avec un autre module d'absorption d'énergie par compression.

Selon une autre caractéristique de l'invention, au moins une des parois de jonction du dispositif d'absorption d'énergie par compression comprend au moins un système de fixation à au moins une première paroi d'extrémité et à au moins une deuxième paroi d'extrémité.

Plus particulièrement, la paroi de jonction commune comprend au moins un système de fixation.

Encore plus particulièrement, au moins une des parois de jonction parallèle à la parois commune comprend des fixations.

Selon une autre caractéristique de l'invention, une des parois de jonction du module d'absorption d'énergie par compression comprend au moins un système de fixation à au moins une première paroi d'extrémité et à au moins une deuxième paroi d'extrémité.

L'invention a également pour objet un aéronef comprenant au moins un dispositif d'absorption d'énergie par compression selon l'une des caractéristiques précédentes.

D'autres caractéristiques et avantages ressortiront de la description de l'invention qui va suivre, description donnée à titre d'exemple uniquement, en regard des dessins annexés parmi lesquels :
[Fig. 1] est une vue latérale d'un aéronef,

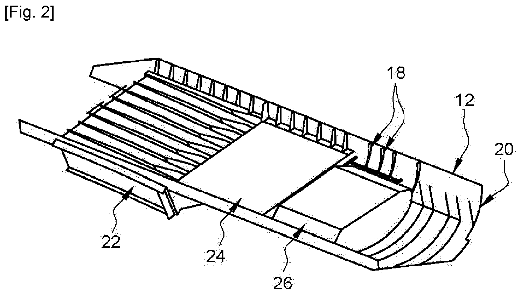

[Fig. 2] est une vue en perspective d'une partie inférieure d'un aéronef illustrant un mode de réalisation de l'invention,

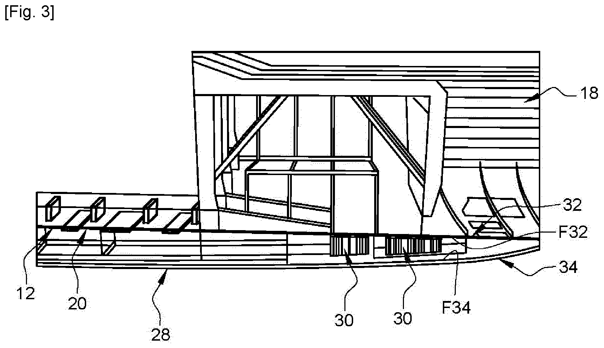

[Fig. 3] est une coupe longitudinale d'une partie inférieure d'un fuselage d'aéronef comportant des modules d'absorption d'énergie par compression à l'état non déformé illustrant un mode de réalisation de l'invention,
[Fig. 4] est une coupe longitudinale d'une partie inférieure d'un fuselage d'aéronef comportant des modules d'absorption d'énergie par compression à l'état déformé illustrant un mode de réalisation de l'invention,
[Fig. 5] est une vue en perspective de modules d'absorption d'énergie par compression illustrant un mode de réalisation de l'invention, à l'état non déformé sur la partie (A) et à l'état déformé sur la partie (B),
[Fig. 6] est une vue latérale de deux modules d'absorption d'énergie par compression illustrant un mode de réalisation de l'invention, à l'état non déformé sur la partie (A) et à l'état déformé sur la partie (B),
[Fig. 7] est une vue de dessus de modules d'absorption d'énergie par compression illustrant un mode de réalisation de l'invention,
[Fig. 8] est une vue en perspective de modules d'absorption d'énergie par compression illustrant un mode de réalisation de l'invention,
[Fig. 9] est une vue en perspective d'un module d'absorption d'énergie par compression illustrant un mode de réalisation de l'invention,
[Fig. 10] est une vue latérale d'un module d'absorption d'énergie par compression illustrant un mode de réalisation de l'invention,
[Fig. 11] est une vue de dessus d'un module d'absorption d'énergie par compression illustrant un mode de réalisation de l'invention,
[Fig. 12] est une vue en perspective d'un module d'absorption d'énergie par compression illustrant un mode de réalisation de l'invention,
[Fig. 13] est une coupe transversale d'une partie d'un aéronef comprenant plusieurs modules d'absorption d'énergie par compression, suspendus sous un réservoir, illustrant un mode de réalisation de l'invention, et

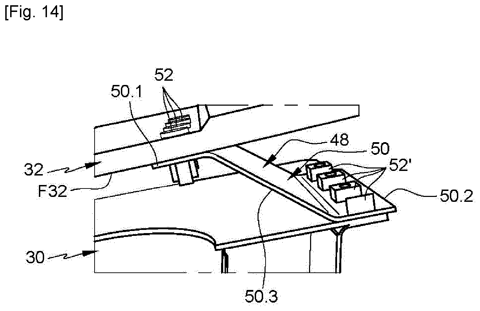

[Fig. 14] est une vue en perspective d'une liaison reliant un module d'absorption d'énergie par compression et un élément de l'aéronef illustrant un mode de réalisation de l'invention.
[Fig. 15] est une vue de dessus d'un dispositif d'absorption d'énergie par compression comprenant cinq modules d'absorption d'énergie par compression, illustrant un mode de réalisation de l'invention.
[Fig. 16] ] est une vue de dessus d'un dispositif d'absorption d'énergie par compression comprenant cinq modules d'absorption d'énergie par compression, illustrant un mode de réalisation de l'invention.
[Fig. 17] est une vue de dessus d'un dispositif d'absorption d'énergie par compression comprenant quatre modules d'absorption d'énergie par compression, illustrant un mode de réalisation de l'invention.
[Fig. 18] est une vue de dessus d'un dispositif d'absorption d'énergie par compression comprenant quatre modules d'absorption d'énergie par compression, illustrant un mode de réalisation de l'invention.
[Fig. 19] est une vue de dessus de plusieurs dispositifs d'absorption d'énergie par compression configuré pour être placé entre des premier et second éléments (32, 34) d'un aéronef.

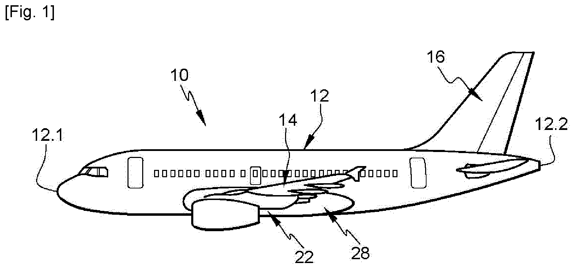

Selon un mode de réalisation visible sur la figure 1, un aéronef 10 comprend un fuselage 12 qui s'étend d'une pointe avant 12.1 jusqu'à une pointe arrière 12.2, des ailes 14 positionnées de part et d'autre du fuselage 12 ainsi qu'un empennage 16 positionné au niveau de la pointe arrière 12.2 du fuselage 12.

Pour la suite de la description, une direction longitudinale est une direction parallèle à un axe longitudinal sensiblement horizontal lorsque l'aéronef est au sol, qui s'étend de la pointe avant 12.1 jusqu'à la pointe arrière 12.2. L'aéronef 10 présente un plan de symétrie longitudinal vertical contenant l'axe longitudinal.

Le fuselage 12 comprend également une structure primaire 18 composée de cadres et de lisses ainsi qu'une peau 20 rapportée sur la structure primaire 18. Il comprend également un caisson central de voilure 22 ainsi qu'une case de train d'atterrissage 24 décalée vers l'arrière par rapport au caisson central de voilure 22. Selon une configuration, le fuselage 12 comprend au moins un réservoir 26 décalé vers l'arrière par rapport à la case de train d'atterrissage 24.

L'aéronef 10 comprend un carénage ventral 28 qui s'étend sous le caisson central de voilure 22, la case de train d'atterrissage 24 et le réservoir 26 et présente une largeur sensiblement égale à celle du fuselage 12. Au moins au droit du réservoir 26, le carénage ventral 28 et le fuselage 12 (plus particulièrement la peau 20 du fuselage 12) sont espacés. Selon une configuration, le réservoir 26 est un réservoir structural intégré en partie dans la structure du fuselage 12.

L'aéronef 10 comprend au moins un dispositif d'absorption d'énergie par compression, intercalé entre le carénage ventral 28 et le fuselage 12 (plus particulièrement la peau 20 du fuselage 12), qui comporte au moins un module d'absorption d'énergie par compression 30 intercalé entre le carénage ventral 28 et le fuselage 12 (plus particulièrement la peau 20 du fuselage 12). Selon une configuration, l'aéronef 10 comprend au moins un module d'absorption d'énergie par compression 30 intercalé entre le carénage ventral 28 et le réservoir 26, positionné sous ce dernier. Cette configuration permet l'ajout d'un réservoir 26 supplémentaire à l'arrière de la case de train d'atterrissage 24, ledit réservoir 26 étant protégé par au moins un module d'absorption d'énergie par compression 30 en cas de choc vertical au niveau du carénage ventral 28.

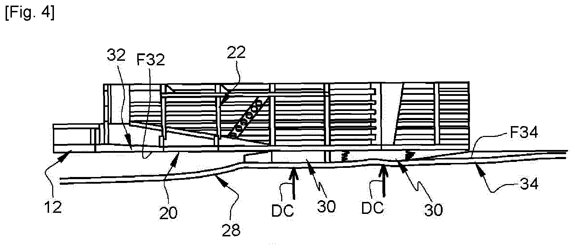

Bien entendu, l'invention n'est pas limitée à cet agencement. Ainsi, le dispositif d'absorption d'énergie par compression pourrait être positionné dans un autre endroit de l'aéronef. Plus généralement, le dispositif d'absorption d'énergie par compression est configuré pour être positionné entre des premier et deuxième éléments 32, 34, plus précisément entre des première et deuxième surfaces de contact F32, F34, et être soumis à des efforts de compression orientés selon une direction de compression DC (visible sur la figure 4) sécante avec les premier et deuxième éléments 32, 34. Selon un premier agencement, les première et deuxième surfaces de contact F32, F34 sont sensiblement parallèles entre elles et sensiblement perpendiculaires à la direction de compression DC. Selon un autre agencement, les première et deuxième surfaces de contact F32, F34 ne sont pas parallèles entre elles, et l'une d'elles est perpendiculaire à la direction de compression DC.

Chaque module d'absorption d'énergie par compression 30 comprend plusieurs premiers conduits 36 espacés entre eux, orientés selon la direction de compression DC et présentant chacun une première section transversale (perpendiculaire à la direction de compression DC) ainsi que des parois de jonction 38 parallèles à la direction de compression DC et reliant des premiers conduits 36 de manière à délimiter, avec ces derniers, au moins un deuxième conduit 40 qui présente une deuxième section transversale (perpendiculaire à la direction de compression DC).

Selon un mode de réalisation, chacun des premier conduits 36 délimitant le conduit 40 est espacé de tous autres conduits 36 délimitant ce même conduit 40. Selon un mode particulier, le module d'absorption d'énergie par compression 30 peut comprendre au moins un conduit 36 ne délimitant pas le conduit 40. Plus particulièrement, les premier conduits 36 ne délimitant pas le conduit 40 peuvent partager une partie de leur paroi latérale 42 avec les premier conduits 36 délimitant le conduit 40. Par exemple, les premier conduits 36 délimitant le conduit 40 et les conduits 36 ne délimitant pas le conduit 40 peuvent être configurés pour être demi-cylindrique de telle sorte que si ces deux conduits 36 partagent une partie de leur paroi latérale 42 une forme cylindrique soit obtenue, celle-ci comprenant la partie de la paroi latérale commune 42.

Chaque premier conduit 36 présente une paroi latérale 42 et s'étend entre des première et deuxième extrémités 42.1, 42.2 orientées respectivement en direction des premier et deuxième éléments 32, 34.

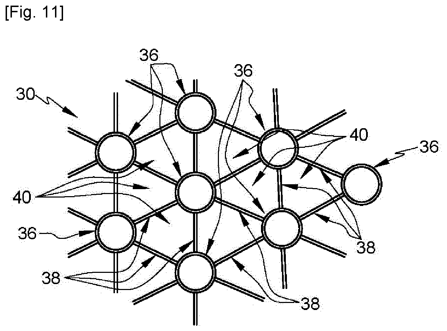

Selon un mode de réalisation visible sur la figure 11, les premiers conduits 36 d'un même module d'absorption d'énergie par compression 30 ont tous la même section transversale.

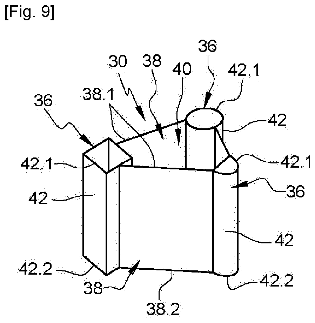

Selon un mode de réalisation visible sur la figure 9, les premiers conduits 36 d'un même module d'absorption d'énergie par compression 30 ont des sections transversales différentes.

Selon les différents modes de réalisation, les premières sections transversales des premiers conduits 36 peuvent être prismatiques, carrées, rectangulaires triangulaires, en forme de cercle ou de demi-cercle. Bien entendu, l'invention n'est pas limitée à ces géométries pour les premières sections transversales des premiers conduits 36.

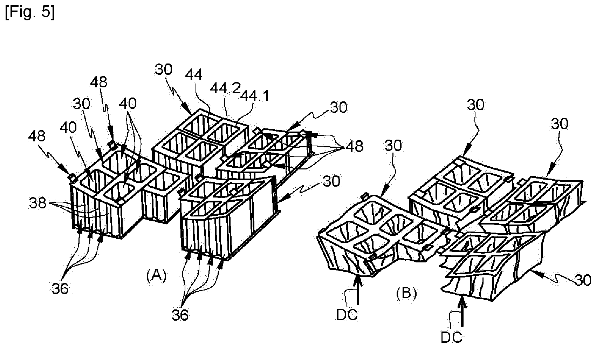

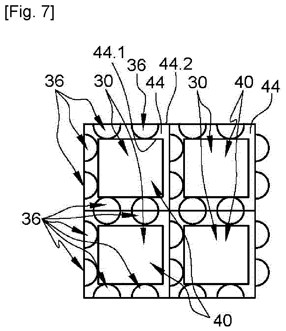

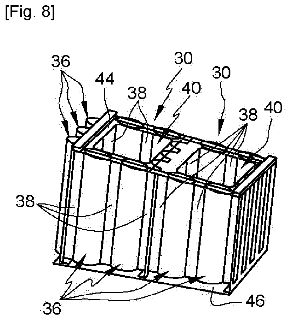

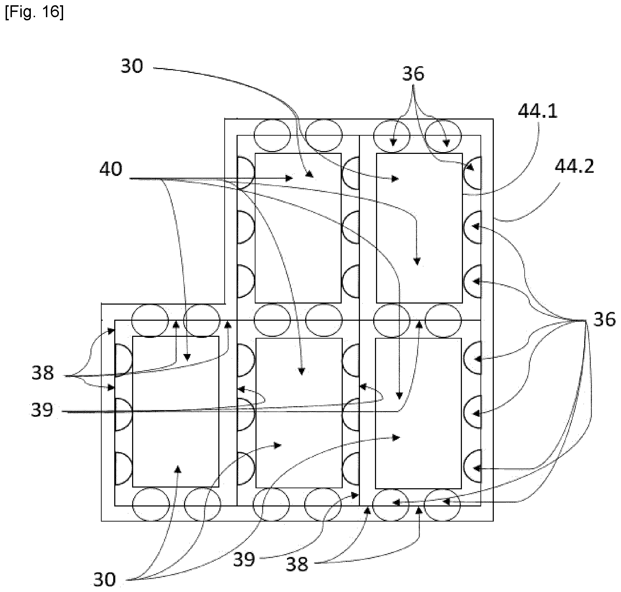

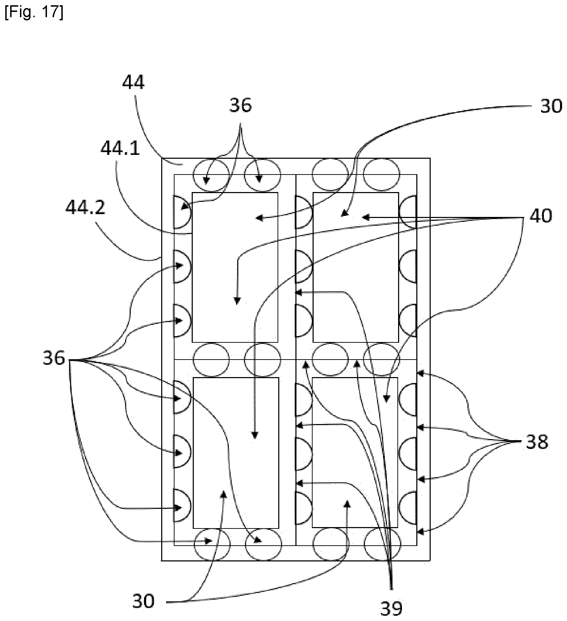

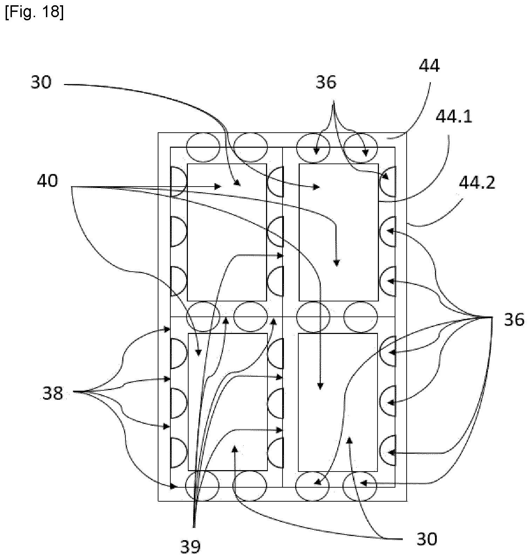

Selon un mode de réalisation visible sur les figures 5 à 8 et 15 à 19, un module d'absorption d'énergie par compression 30 comprend des premiers conduits 36 présentant des premières sections transversales en forme de cercle ou de demi-cercle qui ont sensiblement le même diamètre.

Les premiers conduits 36 présentent par exemple une première section transversale comprise entre 20 et 200 cm².

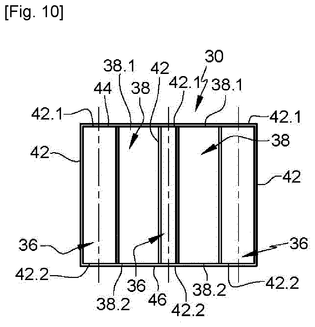

Selon des modes de réalisation visibles notamment sur les figures 9 et 10, chaque paroi de jonction 38 est sensiblement rectangulaire et s'étend entre des premier et deuxième bords 38.1, 38.2 orientés respectivement en direction des premier et deuxième éléments 32, 34 ainsi que des troisième et quatrième bords 38.1, 38.2 reliés à des premiers conduits 36.

Selon les configurations, les parois de jonction 38 sont planes. Certaines parois de jonction 38 peuvent être non planes et présenter au moins une forme en creux pour loger au moins partiellement un premier conduit 36 d'un autre module d'absorption d'énergie par compression 30.

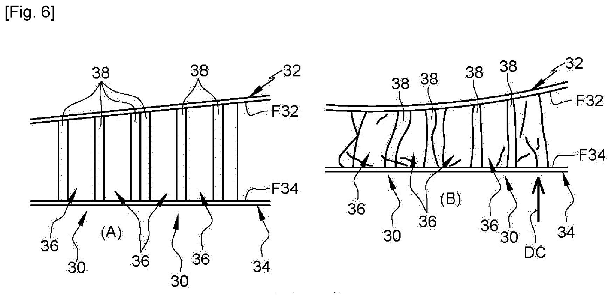

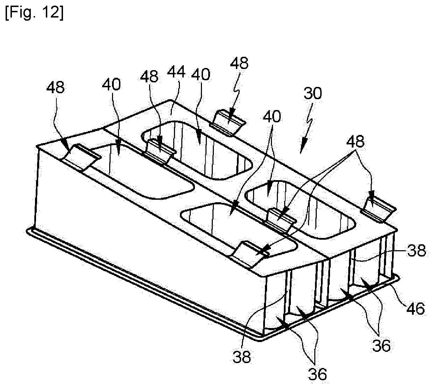

Selon un mode de réalisation, les parois de jonction 38 des modules d'absorption d'énergie par compression 30 sont orientées selon deux ou trois directions de manière à obtenir un réseau de parois de jonction de type orthogrid comme illustré sur les figures 5, 7, 8,12 et 15 à 19 ou de type isogrid comme illustré sur la figure 6. Cette solution permet d'obtenir un écrasement des premiers conduits 36 qui assure une absorption d'énergie et non un déversement desdits premiers conduits 36.

Selon un agencement, les parois de jonction 38 forment un réseau de type orthogrid et sont orientées selon une première direction parallèle à la direction longitudinale et selon une deuxième direction perpendiculaire à la direction longitudinale.

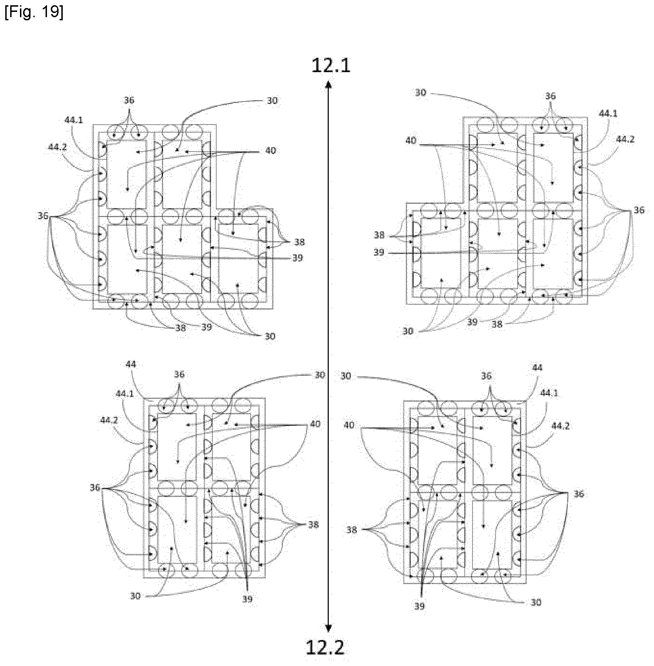

Selon une configuration représentée figure 19, le dispositif d'absorption d'énergie par compression comprend plusieurs modules d'absorption d'énergie par compression 30 positionnés de manière symétrique par rapport au plan de symétrie longitudinal vertical de l'aéronef.

Les premières extrémités 42.1 des premiers conduits 36 ainsi que les premiers bords 38.1 des parois de jonction 38 d'un même module d'absorption d'énergie par compression 30 sont positionnés dans un même premier plan ou la même première surface quasiment plane.

En complément, les deuxièmes extrémités 42.2 des premiers conduits 36 ainsi que les deuxièmes bords 38.2 des parois de jonction 38 d'un même module d'absorption d'énergie par compression 30 sont positionnés dans un même deuxième plan ou la même deuxième surface quasiment plane.

Les parois de jonction 38 sont reliées aux premiers conduits 36 par tout moyen approprié, comme par soudage par exemple. En variante, les parois de jonction 38 et les premiers conduits 36 d'un module d'absorption d'énergie par compression 30 sont réalisés d'un seul tenant par un procédé de fabrication additive par exemple.

Selon un mode de réalisation, les parois de jonction 38 et les premiers conduits 36 d'un module d'absorption d'énergie par compression 30 sont réalisés en alliage d'aluminium, notamment à partir de feuilles d'alliage d'aluminium.

Pour chaque deuxième conduit 40, sa deuxième section transversale correspond à une zone délimitée par les parois de jonction 38 et une partie des parois latérales 42 des premiers conduits 36 et ne comprend pas les premières sections transversales des premiers conduits 36 le bordant.

Selon une forme de réalisation de l'invention, pour chaque module d'absorption d'énergie par compression 30, la deuxième section transversale du deuxième conduit 40 est supérieure à celle(s) des premiers conduits 36. Selon une configuration, la deuxième section transversale du deuxième conduit 40 est au moins deux fois supérieure à la première section transversale de chaque premier conduit 36 bordant le deuxième conduit 40. Un tel module d'absorption d'énergie par compression permet d'absorber une plus grande quantité d'énergie.

Selon une configuration, la deuxième section transversale du deuxième conduit 40 est supérieure à la somme des premières sections transversales des premiers conduits 36 bordant le deuxième conduit 40 et inférieure à 10 fois la somme des premières sections transversales des premiers conduits 36 bordant le deuxième conduit 40.

Selon une configuration, les parois de jonction 38 et les premiers conduits 36 d'un même module d'absorption d'énergie par compression 30 sont agencés de manière à ce que le deuxième conduit 40 présente une section transversale prismatique, carrée, rectangulaire, triangulaire ou circulaire. Bien entendu, l'invention n'est pas limitée à ces géométries pour les sections transversales du deuxième conduit 40.

Selon un mode de réalisation, le module d'absorption d'énergie par compression 30 comprend au moins un deuxième conduit 40. Selon un autre mode de réalisation, le module d'absorption d'énergie par compression 30 comprend plusieurs deuxièmes conduits 40. Selon un agencement, les deuxièmes conduits 40 d'un même module d'absorption d'énergie par compression 30 sont tous identiques, comme illustré sur la figure 11.

Selon des agencements visibles sur les figures 9 et 11, le module d'absorption d'énergie par compression 30 comprend au moins un deuxième conduit 40 présentant une deuxième section transversale triangulaire, les premiers conduits 36 étant positionnés au niveau des sommets de la section transversale de chaque deuxième conduit 40.

Selon un autre agencement visible sur les figures 5 à 8 et 15 à 19, le module d'absorption d'énergie par compression 30 comprend au moins un deuxième conduit 40 présentant une deuxième section transversale bordée par des premiers conduits 36 étant écartés des sommets de la section transversale de chaque deuxième conduit 40. Dans un mode de réalisation particulier, le module d'absorption d'énergie par compression 30 comprend au moins un deuxième conduit 40 présentant une deuxième section transversale carrée ou rectangulaire.

Selon l'agencement visible sur les figures 5 à 8 et 15 à 19, le module d'absorption d'énergie par compression 30 comprend au moins un deuxième conduit 40 qui présente une deuxième section transversale bordée par des premiers conduits 36 cylindriques et/ou demi-cylindriques. Dans un mode de réalisation les premier conduits 36 sont positionnés au niveau des côtés de la deuxième section transversale et écartés des sommets de cette deuxième section transversale. Plus particulièrement, le module d'absorption d'énergie par compression 30 comprend, au niveau des côtés du deuxième conduit 40, deux ou trois premiers conduits 36 cylindriques et/ou demi-cylindriques. Dans un mode de réalisation plus particulier, le module d'absorption d'énergie par compression 30 comprend au moins un deuxième conduit 40 présentant une deuxième section transversale carrée ou rectangulaire.

Selon l'agencement visible sur les figures 5 à 8 et 15 à 19, le module d'absorption d'énergie par compression 30 comprend au niveau des côtés du deuxième conduit 40, deux ou trois premiers conduits 36 cylindriques et/ou demi-cylindriques.

Le deuxième conduit 40 présente une deuxième section transversale comprise entre 200 et 2000 cm².

Les dimensions et le (ou les) matériau(x) des premiers conduits 36 et des parois de jonction 38 sont déterminés de manière à obtenir un écrasement progressif des premiers conduits 36, favorisant l'absorption d'énergie et non un déversement de ces derniers.

Pour tous les modes de réalisation, le module d'absorption d'énergie par compression 30 comprend au moins une première paroi d'extrémité 44 configurée pour obturer la première extrémité 42.1 d'au moins un premier conduit 36 ainsi qu'au moins une deuxième paroi d'extrémité 46 configurée pour obturer la deuxième extrémité 42.2 d'au moins un premier conduit 36.

Selon une autre caractéristique, la première paroi d'extrémité 44 est configurée de sorte à dégager au moins partiellement le deuxième conduit 40. Selon une autre caractéristique, la deuxième paroi d'extrémité 46 est configurée de sorte à dégager au moins partiellement le deuxième conduit 40.

Selon un mode de réalisation, le module d'absorption d'énergie par compression 30 comprend au moins une première paroi d'extrémité 44 configurée pour obturer la première extrémité 42.1 d'au moins un premier conduit 36 et dégageant au moins partiellement le deuxième conduit 40 ainsi qu'au moins une deuxième paroi d'extrémité 46 configurée pour obturer la deuxième extrémité 42.2 d'au moins un premier conduit 36 et dégageant au moins partiellement le deuxième conduit 40.

Selon un agencement, le module d'absorption d'énergie par compression 30 comprend une ou plusieurs première(s) paroi(s) d'extrémité 44 obturant la première extrémité 42.1 de tous les premiers conduits 36 et dégageant au moins partiellement le deuxième conduit 40 ainsi qu'une ou plusieurs deuxième(s) paroi(s) d'extrémité 46 obturant la deuxième extrémité 42.2 de tous les premiers conduits 36 et dégageant au moins partiellement le deuxième conduit 40.

Selon une configuration, une première paroi d'extrémité 44 est configurée pour obturer les premières extrémités 42.1 de plusieurs premiers conduits 36 du module d'absorption d'énergie par compression 30. Une deuxième paroi d'extrémité 46 est configurée pour obturer les deuxièmes extrémités 42.2 de plusieurs conduits 36 du module d'absorption d'énergie par compression 30.

Selon un agencement, la première paroi d'extrémité 44 est configurée pour obturer les premières extrémités 42.1 de tous les premiers conduits 36 du module d'absorption d'énergie par compression 30. Cette première paroi d'extrémité 44 forme un cadre délimité par un bord intérieur 44.1 ainsi qu'un bord extérieur 44.2 espacé du bord intérieur 44.1 d'une distance suffisante pour obturer les premiers conduits 36 du module d'absorption d'énergie par compression 30. La deuxième paroi d'extrémité 46 est configurée pour obturer les deuxièmes extrémités 42.2 de tous les premiers conduits 36 du module d'absorption d'énergie par compression 30. Cette deuxième paroi d'extrémité 46 forme un cadre délimité par un bord intérieur ainsi qu'un bord extérieur espacé du bord intérieur d'une distance suffisante pour obturer les premiers conduits 36 du module d'absorption d'énergie par compression 30.

Bien entendu, l'invention n'est pas limitée à ce nombre et à cette géométrie pour les première et deuxième parois d'extrémité 44, 46. Ainsi, chacune des première et deuxième parois d'extrémité 44, 46 peut être formée d'une unique paroi ou de plusieurs parois juxtaposées.

Selon un mode de réalisation, les première et deuxième parois d'extrémités 44, 46 font partie du module d'absorption d'énergie par compression 30 et sont reliées aux premiers conduits 36 et aux parois de jonction 38 par tout moyen approprié, comme par soudage par exemple. Bien entendu, l'invention n'est pas limitée à ce mode de réalisation. Ainsi, au moins l'une des première et deuxième parois d'extrémité 44, 46 pourrait ne pas faire partie du module d'absorption d'énergie par compression 30 et être solidaire du premier ou deuxième élément 32, 34 entre lesquels ledit module d'absorption d'énergie par compression 30 est positionné.

Selon un mode de réalisation visible sur les figures 5, 12 à 13, le dispositif d'absorption d'énergie par compression comprend au moins un système d'attache 48 reliant chaque module d'absorption d'énergie par compression 30 à au moins un élément parmi les premier et deuxième éléments 32, 34 entre lesquels ledit module d'absorption d'énergie par compression 30 est positionné. Selon une configuration, ce système d'attache 48 est configuré pour permettre un montage ou démontage rapide du module d'absorption d'énergie par compression 30.

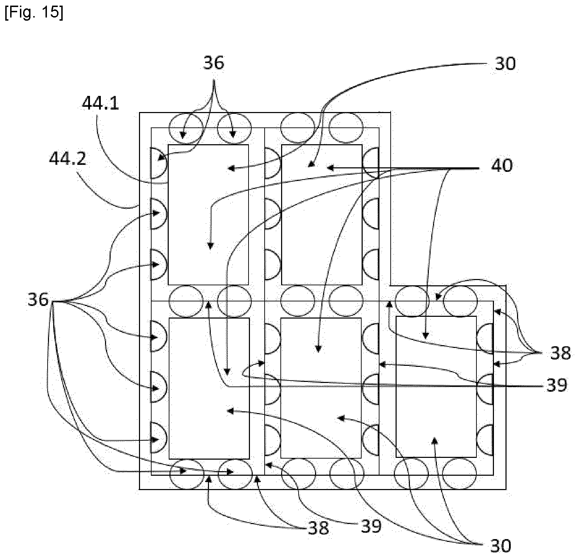

Selon un mode de réalisation visible figure 15 à 18, le dispositif d'absorption d'énergie par compression comprend au moins deux modules d'absorption d'énergie par compression 30 dont au moins un module d'absorption d'énergie par compression comprend au moins une paroi de jonction commune 39 avec un autre module d'absorption d'énergie par compression 30.

Selon un mode de réalisation, une des parois de jonction 38 du dispositif d'absorption d'énergie par compression comprend au moins un système de fixation à au moins une première paroi d'extrémité 44 et à au moins une deuxième paroi d'extrémité 46. Plus particulièrement, la paroi de jonction commune 39 comprend au moins un système de fixation à au moins une première paroi d'extrémité 44 et à au moins une deuxième paroi d'extrémité 46. Encore plus particulièrement, au moins une des parois de jonction 38 parallèle à la paroi commune comprend des fixations à au moins une première paroi d'extrémité 44 et à au moins une deuxième paroi d'extrémité 46.

Selon un autre mode de réalisation, une des parois de jonction 38 du module d'absorption d'énergie par compression comprend au moins un système de fixation à au moins une première paroi d'extrémité 44 et à au moins une deuxième paroi d'extrémité 46.

Dans le cas d'un aéronef, chaque module d'absorption d'énergie par compression 30 comprend plusieurs systèmes d'attache 48 pour le relier au fuselage 12 (plus particulièrement à la peau 20 du fuselage 12) et/ou au carénage ventral 28. Selon une configuration, chaque module d'absorption d'énergie par compression 30 n'est relié qu'à un seul élément parmi les premier et deuxième éléments 32, 34. Selon un agencement, le premier élément 32 étant décalé vers le haut par rapport au deuxième élément 34 (lorsque l'aéronef est au sol), chaque module d'absorption d'énergie par compression est suspendu sous le premier élément 32, à savoir le fuselage 12 ou le réservoir 26.

Selon un agencement, chaque module d'absorption d'énergie par compression 30 n'est relié qu'au fuselage 12 et/ou au réservoir et n'est pas relié au carénage ventral 28. Selon cet agencement, chaque module d'absorption d'énergie par compression 30 est suspendu sous le fuselage 12. Dans la mesure où chaque module d'absorption d'énergie par compression 30 n'est relié qu'à un unique élément parmi le fuselage 12 et le carénage ventral 28, il n'assure aucune transmission d'efforts entre le fuselage 12 et le carénage ventral 28, ce qui permet de simplifier sa conception.

Selon un mode de réalisation, chaque module d'absorption d'énergie par compression 30 est indépendant des premier et deuxième éléments 32, 34 (fuselage 12 ou carénage ventral 28) entre lesquels il est positionné et relié à au moins un de ces premier et deuxième éléments 32, 34 par le (ou les) système(s) d'attache 48 démontable. Par une liaison démontable, on entend que chaque module d'absorption d'énergie par compression 30 peut être assemblé ou désassemblé plusieurs fois, et ce sans impact sur les caractéristiques des premier et deuxième éléments 32, 34. En ce sens, chaque système d'attache 48 est conçu pour être relié au premier ou deuxième élément 32, 34 sans aucune modification de ces derniers.

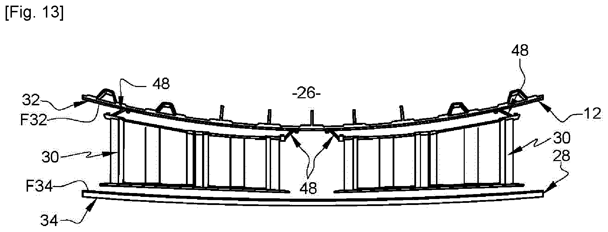

Selon un agencement visible sur la figure 13, chaque module d'absorption d'énergie par compression 30 est espacé des premier et deuxième éléments 32, 34. Selon un mode de réalisation, chaque système d'attache 48 comprend une cornière 50 qui présente une première aile 50.1 plaquée contre le premier ou le deuxième élément 32, 34 et reliée à ce dernier par au moins un premier élément de liaison 52, une deuxième aile 50.2 plaquée contre le module d'absorption d'énergie par compression 30 et reliée à ce dernier par au moins un deuxième élément de liaison 52' ainsi qu'une âme 50.3 reliant les première et deuxième ailes 50.1, 50.2 de manière à former une seule et unique pièce en Z. Au moins l'un des premier et deuxième éléments de liaison est démontable 52, 52' et se présente sous la forme d'un boulon par exemple. Bien entendu, l'invention n'est pas limitée à ce mode de réalisation pour les systèmes d'attache 48. Ainsi, les systèmes d'attache pourraient avoir une section en C.

## Revendications

1. Dispositif d'absorption d'énergie par compression configuré pour être positionné entre des premier et deuxième éléments (32, 34) et être soumis à des efforts de compression orientés selon une direction de compression (DC), ledit dispositif comportant au moins un module d'absorption d'énergie par compression (30) qui comprend plusieurs premiers conduits (36) orientés selon la direction de compression (DC) et présentant chacun une section transversale ainsi que des première et deuxième extrémités (42.1, 42.2) ; **caractérisé en ce que** des premiers conduits (36) sont espacés entre eux et **en ce que** le module d'absorption d'énergie par compression (30) comprend des parois de jonction (38), parallèles à la direction de compression (DC), reliant ces premiers conduits (36) de manière à délimiter avec ces derniers au moins un deuxième conduit (40),et **en ce que** ledit module d'absorption d'énergie par compression (30) comprend au moins une première paroi d'extrémité (44) configurée pour obturer la première extrémité (42.1) d'au moins un premier conduit (36) ainsi qu'au moins une deuxième paroi d'extrémité (46) configurée pour obturer la deuxième extrémité (42.2) d'au moins un premier conduit (36).

2. Dispositif d'absorption d'énergie par compression selon la revendication 1 **caractérisé en ce que** ledit module d'absorption d'énergie par compression (30) comprend au moins une première paroi d'extrémité (44) configurée pour obturer la première extrémité (42.1) d'au moins un premier conduit (36) et dégageant au moins partiellement le deuxième conduit (40) ainsi qu'au moins une deuxième paroi d'extrémité (46) configurée pour obturer la deuxième extrémité (42.2) d'au moins un premier conduit (36) et dégageant au moins partiellement le deuxième conduit (40).

3. Dispositif d'absorption d'énergie par compression selon l'une des revendications précédentes **caractérisé en ce que** chacun des conduits (36) délimitant le conduit (40) est espacé de tous autres conduits (36) délimitant ce même conduit (40),

4. Dispositif d'absorption d'énergie par compression selon l'une des revendications précédentes, **caractérisé en ce que** chaque deuxième conduit (40) présente une section transversale supérieure à la section transversale de chaque premier conduit (36) bordant le deuxième conduit (40).

5. Dispositif d'absorption d'énergie par compression selon l'une des revendications précédentes, **caractérisé en ce que** les parois de jonction (38) sont orientées selon deux ou trois directions de manière à obtenir un réseau de type orthogrid ou isogrid.

6. Dispositif d'absorption d'énergie par compression selon la revendication précédente, **caractérisé en ce que** le module d'absorption d'énergie par compression (30) comprend au moins un deuxième conduit (40) de section transversale carrée ou rectangulaire, des premiers conduits (36) étant positionnés au niveau des côtés de la section transversale du ou des deuxième conduit (40) sensiblement carrée ou rectangulaire et écartés des sommets de la section transversale de chaque deuxième conduit (40).

7. Dispositif d'absorption d'énergie par compression selon la revendication précédente, **caractérisé en ce que** le module d'absorption d'énergie par compression (30) comprend, au niveau des côtés du deuxième conduit (40), deux ou trois premiers conduits (36) cylindriques et/ou demi-cylindriques.

8. Dispositif d'absorption d'énergie par compression selon l'une des revendications précédentes, **caractérisé en ce que** le module d'absorption d'énergie par compression (30) comprend une ou plusieurs première(s) paroi(s) d'extrémité (44) obturant la première extrémité (42.1) de tous les premiers conduits (36) et dégageant au moins partiellement le deuxième conduit (40) ainsi qu'une ou plusieurs deuxième(s) paroi(s) d'extrémité (46) obturant la deuxième extrémité (42.2) de tous les premiers conduits (36) et dégageant au moins partiellement le deuxième conduit (40).

9. Dispositif d'absorption d'énergie par compression selon la revendication précédente, **caractérisé en ce que** chacune des première et deuxième parois d'extrémité (44, 46) forme un cadre délimité par un bord intérieur (44.1) ainsi que par un bord extérieur (44.2) espacé du bord intérieur (44.1) d'une distance suffisante pour obturer les premiers conduits (36) du module d'absorption d'énergie par compression (30).

10. Dispositif d'absorption d'énergie par compression selon l'une des revendications précédentes, **caractérisé en ce que** chaque module d'absorption d'énergie par compression (30) comprend au moins un système d'attache (48) pour le relier à au moins un élément parmi les premier et deuxième éléments (32, 34) entre lesquels ledit module d'absorption d'énergie par compression (30) est positionné.

11. Dispositif d'absorption d'énergie par compression selon l'une des revendications précédentes **caractérisé en ce qu'**il comprend au moins deux modules d'absorption d'énergie par compression (30) et **en ce qu'**au moins un module d'absorption d'énergie par compression (30) comprend au moins une paroi de jonction (38) commune (39) avec un autre module d'absorption d'énergie par compression (30).

12. Dispositif d'absorption d'énergie par compression selon l'une des revendications précédentes **caractérisé en ce qu'**une de ses parois de jonction (38) comprend au moins un système de fixation à au moins une première paroi d'extrémité (44) et à au moins une deuxième paroi d'extrémité (46).

13. Dispositif d'absorption d'énergie par compression selon la revendication 11, **caractérisé en ce que** la paroi de jonction commune (39) comprend un système de fixation à au moins une première paroi d'extrémité (44) et à au moins une deuxième paroi d'extrémité (46).

14. Dispositif d'absorption d'énergie par compression selon la revendication 13, **caractérisé en ce que** au moins une des parois de jonction parallèle à la parois commune (39) comprend au moins un système de fixation à au moins une première paroi d'extrémité (44) et à au moins une deuxième paroi d'extrémité (46).

15. Aéronef comprenant au moins un dispositif d'absorption d'énergie par compression selon l'une des revendications précédentes.,
